# EUROPEAN PATENT APPLICATION

(11) **EP 1 946 815 A1**
(43) Date of publication of application: **23.07.2008**
(21) Application number: 07023471.1
(22) Date of filing: 04.12.2007
(51) Int. Cl.: B01D 39/00

(54) **Anti-allergen filter and air cleaning system using the same**

(30) Priority: 11.12.2006 JP 2006333027
(71) Applicant: Sanden Corporation, Isesaki-shi, Gunma 372-8502 (JP)
(72) Inventor: Imafuji, Tomohisa, Isesaki-shi Gunma 372-8502 (JP)
(74) Representative: Feldmeier, Jürgen

(57) **Abstract**

An anti-allergen filter (1) and an air cleaning system (11) using the filter, the anti-allergen filter (1) comprises two or more filter layers arranged in an air flow direction, at least one layer positioned at a downstream side in the air flow direction comprises a first filter layer (4) containing an anti-allergen agent, and at least one layer positioned at an upstream side of the first filter layer (4) comprises a second filter layer (5) containing a porous material with a moisture absorbing/releasing property so that a moisture absorbing/releasing performance within a predetermined range of moisture absorbing/releasing amount can be exhibited. The filter (1) can always achieve both of an excellent performance for trapping allergen substances and a high inactivating rate for the trapped allergen substances stably, thereby exhibiting an excellent anti-allergen performance.

## Description

The present invention relates to an anti-allergen filter and an air cleaning system using the same, and specifically, to an anti-allergen filter suitable for cleaning air in a vehicle interior and the like, and an air cleaning system which uses the filter and which is structured so as to be able to exhibit a high performance.

For example, accompanied with increase of interest and variation of needs with respect to quality of air in a vehicle interior, as a filter for cleaning air in a vehicle interior used in an air conditioning system and the like, various filter have been on the market, to which are given with not only conventional functions for dust collection and deodorization but also functions for trapping and inactivating allergen substances such as pollen and mite. Most of such conventional filters are formed so that an anti-allergen agent for inactivating allergen substances is impregnated into or loaded onto a filter substrate (for example, JP-A-2005-218967), and there are few filters which are filters for air conditioning systems for vehicles required with a small space, a large volume of air and a low pressure loss and which can ensure a good performance for trapping allergen substances and a high anti-allergen performance (a high allergen inactivating rate).

Namely, in the conventional technologies, because the function for trapping allergen substances and the function for inactivating the trapped allergen substances are still poor, there is a problem that the allergen substances trapped by the filter are released again at a condition where the allergen substances are not inactivated.

Accordingly, it would be desirable to provide an anti-allergen filter which can achieve both of an excellent performance for trapping allergen substances and a high inactivating rate due to an anti-allergen agent for the trapped allergen substances, thereby exhibiting an excellent anti-allergen performance, and to provide an air cleaning system using the anti-allergen filter which can always exhibit a high performance stably.

In order to make a filter material containing an anti-allergen agent exhibit a high anti-allergen performance, it has been found that particularly existence of moisture at a specified range in amount is extremely effective, and in order to make the excellent anti-allergen performance exhibit stably, it has been found that combination of a filter layer containing an anti-allergen agent and a filter layer having a predetermined moisture absorbing/releasing property is effective. Thus, the present invention has been completed.

Namely, an anti-allergen filter according to the present invention is characterized in that the filter comprises two or more filter layers arranged in an air flow direction, at least one layer positioned at a downstream side in the air flow direction comprises a first filter layer containing an anti-allergen agent, and at least one layer positioned at an upstream side of the first filter layer comprises a second filter layer containing a porous material with a moisture absorbing/releasing property so that a moisture absorbing/releasing performance within a predetermined range of moisture absorbing/releasing amount can be exhibited.

In such an anti-allergen filter, the second filter layer containing a porous material with a moisture absorbing/releasing property is disposed at an upstream side of the first filter layer containing an anti-allergen agent and exhibiting an anti-allergen performance, and the second filter layer contains the porous material so that a moisture absorbing/releasing performance within a predetermined optimum range can be exhibited. Therefore, it becomes possible that the first filter layer is always kept under an environment with an optimum moisture amount, and while an excellent performance for trapping allergen substances can be maintained, a high anti-allergen performance due to the anti-allergen agent, that is, a high allergen inactivating rate, can be achieved and maintained.

In this anti-allergen filter, it is preferred that the second filter layer has a moisture absorbing/releasing property in a range of 0.2 to 20 g/m² in moisture absorbing/releasing amount. Namely, in order to exhibit such a preferable moisture absorbing/releasing performance, the porous material having the above-described moisture absorbing/releasing property is contained. If the moisture absorbing/releasing property is less than 0.2 g/m², it is difficult to always give a desirable amount of moisture to the first filter layer stably. If the moisture absorbing/releasing property is more than 20 g/m², the moisture amount becomes too much, and as shown in examples described later, the allergen inactivating rate due to the first filter layer is lowered.

Further, in the anti-allergen filter according to the present invention, it is preferred the first filter layer contains the anti-allergen agent at a content in a range of 0.01 to 20 g/m². If the content of the anti-allergen agent is less than 0.01 g/m², it is difficult that the first filter layer exhibits a desirable anti-allergen performance. If the content of the anti-allergen agent is more than 20 g/m², a remarkable improvement of the anti-allergen performance cannot be expected and the cost increases proportionally.

As the porous material having a moisture absorbing/releasing property contained in the second filter layer, typically an activated carbon can be exemplified. Since such a porous material is formed as a porous state substantially over the entire area, moisture can be well absorbed from its surface, for example, a surface of particle material or powder material. As to releasing of moisture, moisture can be released naturally by equilibrium condition with an atmosphere around the porous material, and as the case may be, it can be released forcibly by heating due to a heater and the like.

As a substrate of the first filter layer, for example, a polypropylene or polyethylene terephthalate non-woven fabric having a surface density in a range of 10 to 100 g/m² can be used. If the surface density is too low, it may become difficult to maintain the form of the substrate for containing (for example, loading) the anti-allergen agent. If the surface density is too high, the resistance for air passage may become too great and the function as the filter may be damaged.

As the anti-allergen agent contained in the first filter layer, for example, at least one selected from the group consisting of a tannic acid, a gallotannine, an epicatechin gallate, an epicatechin, an epigallocatechin, an epigallocatechin gallate, an olive leaf extract and a ginkgo leaf extract can be used. It is known that such an anti-allergen agent can achieve a high anti-allergen performance, that is, a high rate for inactivating allergen substances. Where, in the present invention, the olive leaf means the leaf part of "Olea europaea" (scientific name) in osmanthus family, and the ginkgo leaf means the leaf part of "Ginkgo biloba L." (scientific name) in ginkgo family.

Further, although the anti-allergen filter according to the present invention can be used at a simple plane form, in order to exhibit an excellent performance efficiently in a limited space such as in a vehicle, it is preferred to use the anti-allergen filter at a pleated form. However, the form is not particularly limited thereto, other forms such as a wave form and a cylindrical form can be employed.

Further, the anti-allergen filter according to the present invention is suitable for use for cleaning air in a vehicle interior, and it may be disposed, for example, at an appropriate position of an air path of an air conditioning system which communicates with the vehicle interior.

An air cleaning system according to the present invention is a system using the above-described anti-allergen filter, and has a humidifying means capable of controlling a moisture supply amount. By this humidifying means, it becomes possible to adjust or control the second filter layer at the above-described optimum moisture absorbing/releasing performance stably.

This humidifying means is preferably connected to the anti-allergen filter so that moisture is supplied to at least a portion positioned at an upstream side relative to the first filter layer in the air flow direction. By this, it becomes possible to easily adjust or control the second filter layer at the above-described optimum moisture absorbing/releasing performance stably.

Further, the air cleaning system according to the present invention preferably has a moisture recovery means capable of recovering surplus moisture. As aforementioned, if moisture is too much, because the allergen inactivating rate due to the first filter layer is lowered, it is preferred to recover the surplus moisture properly.

It is preferred that the moisture recovery means is disposed at a downstream side of the first filter layer in the air flow direction. If the moisture recovery means is disposed at an upstream side of the first filter layer, because it may remove also necessary moisture. By recovering surplus moisture at a downstream side of the first filter layer, a necessary amount of moisture can be ensured at the portion of the first filter layer.

Such an air cleaning system is also suitable to be provided for a vehicle interior, and it may be formed and disposed, for example, at an appropriate position of an air path of an air conditioning system which communicates with the vehicle interior.

Thus, in the anti-allergen filter and the air cleaning system using the filter according to the present invention, since the first filter layer having an anti-allergen performance and the second filter layer having an optimum moisture absorbing/releasing performance relative to the first filter layer are combined at an optimum formation, while an excellent performance for trapping allergen substances may be maintained, a high inactivating rate of the trapped allergen substances may be achieved.

Further objects, features, and advantages of the present invention will be understood from the following detailed description of preferred embodiments of the present invention with reference to the accompanying figures.

Embodiments of the invention now are described with reference to the accompanying figures, which are given by way of example only, and are not intended to limit the present invention.

Fig. 1 is a schematic perspective view of an anti-allergen filter according to an embodiment of the present invention.

Fig. 2 is a schematic diagram of an air cleaning system according to an embodiment of the present invention.

Fig. 3 is a schematic perspective view of a test device for determining performances in the present invention.

Fig. 4 is a graph showing the result of the determination.

### (Brief explanation of symbols in the figures)

1: anti-allergen filter
2: soiled air
3: cleaned air
4: first filter layer
5: second filter layer
11: air cleaning system
12: humidifying means
13: moisture recovery means
21: dust sampler
22: specimen holding material
23: specimen to be determined
23: suction fan

Hereinafter, desirable embodiments of the present invention will be explained referring to the drawings.

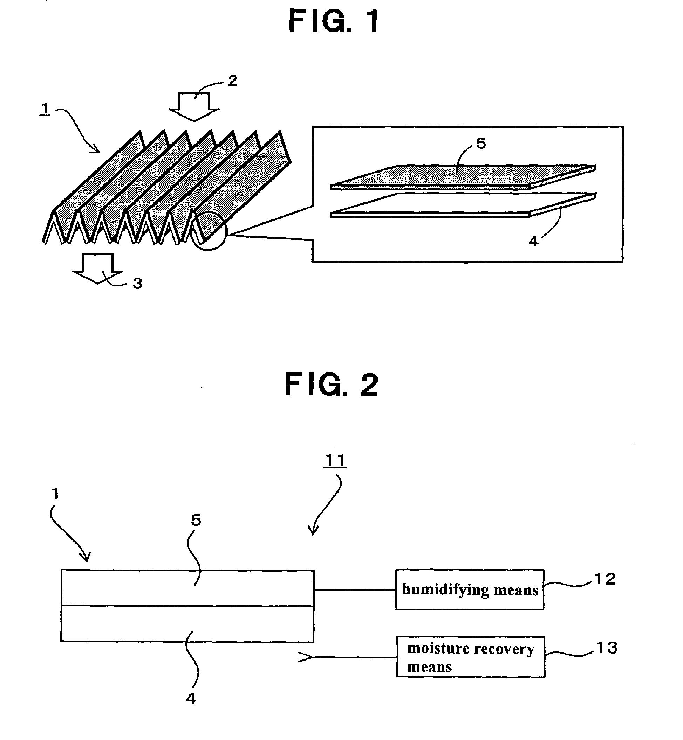

Fig. 1 depicts an anti-allergen filter according to an embodiment of the present invention. In this embodiment, anti-allergen filter 1 is pleated. Relative to this anti-allergen filter 1, soiled air 2 is supplied from upstream side, and air having passed through the filter 1 is sent as cleaned air 3 from downstream side to an vehicle interior, etc. In this embodiment, anti-allergen filter 1 is formed as a two-layer structure of a first filter layer 4 positioned at a downstream side in the air flow direction and a second filter layer 5 positioned at an upstream side in the air flow direction. Although a two-layer structure is exemplified in this embodiment in order to simplify the explanation, a structure having three or more layers may be employed, for example, a structure having a plurality of layers of at least one of first filter layers 4 and second filter layers 5, or a structure having another layer (for example, another intermediate layer), may be employed.

First filter layer 4 is formed as a layer containing an anti-allergen agent, and the anti-allergen agent is contained, for example, by loading the anti-allergen agent onto a filter substrate, holding the anti-allergen agent in the filter substrate, or kneading the anti-allergen agent into the filter substrate. As the kind of the anti-allergen agent, for example, at least one kind of agent may be employed by selecting at least one from the group consisting of a tannic acid, a gallotannine, an epicatechin gallate, an epicatechin, an epigallocatechin, an epigallocatechin gallate, an olive leaf extract and a ginkgo leaf extract. As the content of the anti-allergen agent is controlled within a range of 0.01 to 20 g/m². Further, as the filter substrate, as aforementioned, a polypropylene or polyethylene terephthalate non-woven fabric having a surface density in a range of 10 to 100 g/m² can be used.

Second filter layer 5 is formed as a filter layer containing a porous material with a moisture absorbing/releasing property so that a moisture absorbing/releasing performance within a predetermined range of moisture absorbing/releasing amount can be exhibited. As the predetermined range of moisture absorbing/releasing amount, it is set within a range of 0.2 to 20 g/m². As a porous material having such a moisture absorbing/releasing property, particle-like or powder-like activated carbon can be used.

Fig. 2 depicts an air cleaning system 11 using the above-described anti-allergen filter 1. In this air cleaning system 11, a humidifying means 12 is connected so that moisture can be supplied directly to second filter layer 5, and a moisture recovery means 13 capable of recovering surplus moisture is disposed at a position immediately downstream of first filter layer 4.

Humidifying means 12 can be formed, for example, as a humidifying means using guaze, hygroscopic fibers, etc., or utilizing capillarity, spray mist, ultrasonic wave, heater, etc. As the moisture to be supplied, moisture generated in an air conditioning system or water stored in a separate water tank also may be utilized. Further, moisture recovery means 13 can be formed, for example, as means using a moisture absorbent, etc., in order to recover a surplus amount of the moisture supplied to first filter layer 4 containing an anti-allergen agent.

The following examination was carried out in order to determine the performance of anti-allergen filter formed as described above and to confirm the propriety of the range of the moisture absorbing/releasing amount of the filter material (the moisture absorbing/releasing amount of second filter layer 5) defined in the present invention as a preferable range.

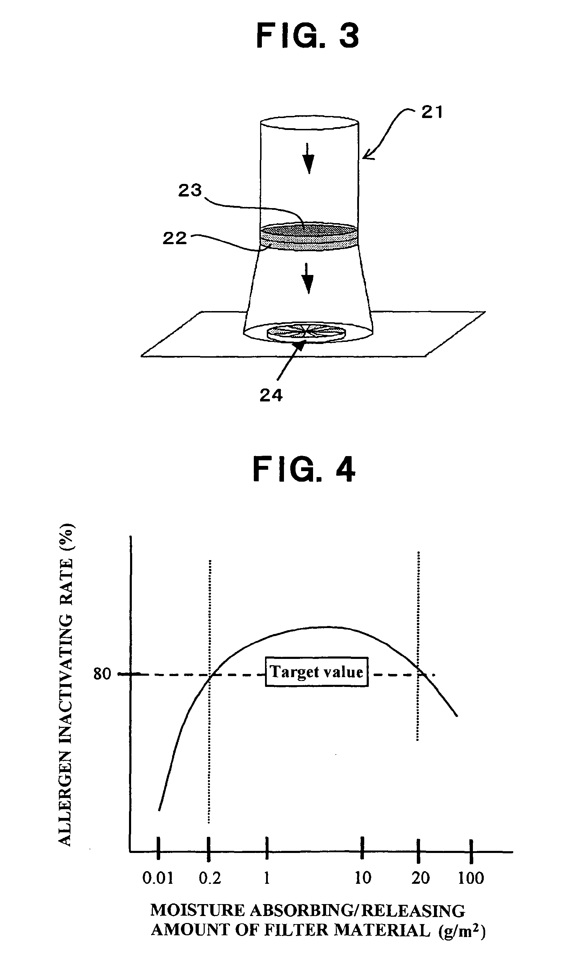

As the method for the determination, as shown in Fig. 3, a specimen holding material 22 with a diameter of 6 cm was fitted into a dust sampler 21, thereon the above-described filter, which was prepared as a specimen to be determined 23 by being cut at a circular form having a diameter of 6 cm, was fitted, and they were set on a suction test device having a suction fan 24. At that condition, fan 24 of the device was adjusted to get an air velocity of 0.1 m/sec. About 10 mg of dust containing mite allergen for the determination of mite allergen, and about 3 mg of cedar pollen for the determination of cedar pollen allergen, were served to the determination surface, respectively. The specimen to be determined 23 was put in a polyethylene bag with a fastener, the mite and cedar pollen allergen was extracted by using 10 mL of phosphate buffer saline containing 10% of skimmed milk to prepare a solution to be determined. With the prepared solution to be determined, by using a method of enzyme-linked immunosorbent assey (ELISA method), the amount of mite and cedar pollen allergen was measured to determine the allergen reduction rate (allergen inactivating rate). In the determination, a value of 80% or more was set as a target value of allergen inactivating rate. In the determination of the above-described examination, a result that could achieve this target value was determined as a rank "○", and a result that could not achieve this target value was determined as a rank "×". The results of the examination are shown in Table 1 and Fig. 4.

**Table 1**

| Moisture absorbing/releasing amount of filter material | Allergen inactivating rate | Determination | |
|---|---|---|---|
| 0.01 g/m² | 33 % | × | Desirable performance is not exhibited because moisture supply is poor. |
| 0.2 g/m² | 80 % | ○ | |
| 1 g/m² | 88 % | ○ | |
| 10 g/m² | 93 % | ○ | |
| 20 g/m² | 80 % | ○ | |
| 100 g/m² | 66 % | × | Desirable performance is not exhibited because moisture supply is too much. |

As is evident from Table 1 and Fig. 4, it is understood that, by the anti-allergen filter according to the present invention, a high allergen inactivating rate of 80% or more can be achieved, in particular, by controlling the moisture absorbing/releasing amount of the filter material within the range of 0.2 to 20 g/m², this high allergen inactivating rate can be surely achieved.

The anti-allergen filter and the air cleaning system using the anti-allergen filter according to the present invention can be applied to any field, and in particular, they are suitable to use for cleaning air in a vehicle interior, which is limited in installation.

## Claims

1. An anti-allergen filter **characterized in that** said filter comprises two or more filter layers arranged in an air flow direction, at least one layer positioned at a downstream side in said air flow direction comprises a first filter layer containing an anti-allergen agent, and at least one layer positioned at an upstream side of said first filter layer comprises a second filter layer containing a porous material with a moisture absorbing/releasing property so that a moisture absorbing/releasing performance within a predetermined range of moisture absorbing/releasing amount can be exhibited.

2. The anti-allergen filter according to claim 1, wherein said second filter layer has a moisture absorbing/releasing property in a range of 0.2 to 20 g/m² in moisture absorbing/releasing amount.

3. The anti-allergen filter according to claim 1 or 2, wherein said first filter layer contains said anti-allergen agent at a content in a range of 0.01 to 20 g/m².

4. The anti-allergen filter according to any preceding claim, wherein said porous material having a moisture absorbing/releasing property contained in said second filter layer comprises an activated carbon.

5. The anti-allergen filter according to any preceding claim, wherein a substrate of said first filter layer comprises a polypropylene or polyethylene terephthalate non-woven fabric having a surface density in a range of 10 to 100 g/m².

6. The anti-allergen filter according to any preceding claim, wherein said anti-allergen agent contained in said first filter layer comprises at least one selected from the group consisting of a tannic acid, a gallotannine, an epicatechin gallate, an epicatechin, an epigallocatechin, an epigallocatechin gallate, an olive leaf extract and a ginkgo leaf extract.

7. The anti-allergen filter according to any preceding claim, wherein said anti-allergen filter is pleated.

8. The anti-allergen filter according to any preceding claim, wherein said anti-allergen filter is used for cleaning air in a vehicle interior.

9. An air cleaning system using said anti-allergen filter according to any preceding claim and having a humidifying means capable of controlling a moisture supply amount.

10. The air cleaning system according to claim 9, wherein said humidifying means is connected to said anti-allergen filter so that moisture is supplied to at least a portion positioned at an upstream side relative to said first filter layer in said air flow direction.

11. The air cleaning system according to claim 9 or 10, wherein said air cleaning system has a moisture recovery means capable of recovering surplus moisture.

12. The air cleaning system according to claim 11, wherein said moisture recovery means is disposed at a downstream side of said first filter layer in said air flow direction.

13. The air cleaning system according to any of claims 9 to 12, wherein said air cleaning system is provided for a vehicle interior.
